# EUROPEAN PATENT APPLICATION

(11) **EP 3 410 382 A1**
(43) Date of publication of application: **05.12.2018**
(21) Application number: 17173495.7
(22) Date of filing: 30.05.2017
(51) Int. Cl.: G06Q 40/08, G05D 1/00, G08G 1/00

(54) **DYNAMIC ADAPTATION OF INSURANCE POLICY FOR A VEHICLE ACCORDING TO A SELECTED DRIVING PROFILE**

(71) Applicant: iOnRoad Technologies Ltd., 5251248 Ramat-Gan (IL)
(72) Inventor: AKIVA, Ohad, 5246425 Ramat-Gan (IL)
(74) Representative: Bertsch, Florian Oliver

(57) **Abstract**

A computer implemented method of adjusting a vehicle insurance policy for an at least partially autonomous vehicle according to a selected driving profile, comprising, detecting an instruction to select a driving profile for a current ride of a vehicle controlled by one or more automated driving units, the driving profile comprising a value for one or more of a plurality of driving parameters of the one or more automated driving units, obtaining from one or more data records, a risk estimation pre-calculated for the value of the one or more driving parameters extracted from the selected driving profile, adjusting, using one or more processors, an insurance policy for the current ride according to the risk estimation and applying automatically the selected driving profile to the one or more automated driving units to control the vehicle accordingly during the current ride.

## Description

### BACKGROUND

Some embodiments described herein relate to adapting a vehicle insurance policy for a vehicle controlled by automated control unit(s), and, more specifically, but not exclusively, to adapting a vehicle insurance policy for a vehicle controlled by automated control unit(s) according to a selected driving profile.

Autonomous vehicles, either ground vehicles, aerial vehicles and/or naval vehicles are rapidly evolving during recent years. The autonomous vehicles may be suitable for a plurality of applications, for example, transportation, industrial, military uses and/or the like and may therefore be deployed in a plurality of arenas.

The autonomous vehicle environment involves multiple disciplines targeting a plurality of challenges rising in the development, application and/or deployment of the autonomous vehicles. Apart from the efforts and resources invested in the autonomous vehicle platform itself a plurality of divers support eco-systems may be required to complement the autonomous vehicle environment.

Autonomous ground vehicle specifically for civilian transport application may currently be one of the main industry focal points, drawing a lot of attention and resources investment. Such applications may require support eco-systems to address issues prompt by the rapidly advancing autonomous ground vehicles, for example, vehicle and person insurance issues, liability issues and/or the like.

### SUMMARY

According to a first aspect described herein there is provided a computer implemented method of adjusting a vehicle insurance policy for an at least partially autonomous vehicle according to a selected driving profile, comprising:
- Detecting an instruction to select a driving profile for a current ride of a vehicle controlled by one or more automated driving units. The driving profile comprising a value for one or more of a plurality of driving parameters controlled by the one or more automated driving units.
- Obtaining from one or more data records, risk estimation associated with the value of the one or more driving parameters extracted from the selected driving profile.
- Adjusting, using one or more processors, an insurance policy for the current ride according to the risk estimation.
- Applying automatically the selected driving profile to the one or more automated driving units to control the vehicle accordingly during the current ride.

Dynamically adapting the insurance policy for the current ride and/or part thereof according to the type of the driver and his selected driving profile may allow for significant flexibility for adapting an optimal insurance plan which may be the most suitable one for the current ride (or part thereof). The insurance policy may therefore be a policy per ride, i.e. per ride insurance fee(s) calculation. This may significantly decrease insurance costs since the insurance fee(s) may be accurately calculated automatically and dynamically for each specific ride (and/or part thereof) thus fixed insurance cost overhead may be significantly reduced and/or avoided altogether.

According to a second aspect described herein there is provided a system for adjusting a vehicle insurance policy for a vehicle according to a selected driving profile, comprising one or more processors of a vehicle adapted to execute code, the code comprising:
- Code instructions to detect an instruction to select a driving profile for at least part of a current ride of a vehicle controlled by one or more automated driving units. The driving profile comprising a value for one or more of a plurality of driving parameters controlled by the one or more automated driving units.
- Code instructions to obtain from one or more data records, risk estimation associated with the value of the one or more driving parameters extracted from the selected driving profile.
- Code instructions to adjusting an insurance policy for the current ride according to the risk estimation.
- Code instructions to apply the automatically the selected driving profile to the one or more automated driving unit to control the vehicle accordingly during the current ride.

In a further implementation form of the first and/or second aspects, the instruction is issued manually by a driver of the vehicle, a traffic controller controlling traffic in at least part of a route of the current ride and/or a supervisor of the vehicle. Detection of manual instructions to select the driving profile may allow automatically adjusting the insurance policy following a driving profile selection initiated by one or more users, i.e. the driver, the supervisor and/or the traffic controller.

In a further implementation form of the first and/or second aspects, the instruction is issued automatically by the automated driving unit(s), a mobile device associated with a driver of the vehicle, a navigation system of the vehicle and/or an automated traffic control system controlling traffic in at least part of a route of the current ride. Detection of automatic instructions to select the driving profile may allow automatically adjusting the insurance policy following a driving profile selection initiated automatically by the automated driving unit(s), the mobile device, the navigation system and/or the automated traffic control system.

In a further implementation form of the first and/or second aspects, the plurality of driving parameters comprise one or more of: a speed limit, an acceleration limit, a turning sharpness limit, a lane change abruptness limit, a breaking rapidness limit and a minimal gap to other objects. Adjusting the insurance policy according to the various driving parameters may increase the driving profile granularity thus allowing the insurance policy to be adjusted to suit the exact driving parameters selected for the current ride and/or part thereof.

In a further implementation form of the first and/or second aspects, the risk estimation is pre-calculated according to the value of the one or more driving parameters. Pre-calculating and/or associating the risk estimation with the exact values selected in the driving profile for the driving parameters may allow fine tuning the risk estimation and hence the entailed insurance fees to the exact driving parameters selected for the current ride and/or part thereof.

In a further implementation form of the first and/or second aspects, the insurance policy comprises a coverage scope, a liability scope and/or an insurance fee. Adjusting the insurance policy may therefore be comprehensive to reflect all aspects, i.e. insurance terms of the insurance policy generated for the current ride.

In a further implementation form of the first and/or second aspects, the insurance policy is adjusted locally by a vehicle insurance unit and/or by a remote server which receives the selected driving profile from the vehicle and transmits the adjusted insurance policy back to the vehicle. This may allow flexible implementation of the automatic and dynamic insurance policy generation as the insurance policy generator may be implemented locally in the vehicle and/or remotely by a centralized server and/or service.

In a further implementation form of the first and/or second aspects, the insurance policy is dynamically adjusted during the current ride following an adjustment of the driving profile. This may allow segmenting the current ride to multiple segments each having an associated driving profile such that the insurance policy may be adjusted dynamically for each segment separately. The insurance policy may therefore be fine-tuned to the exact driving parameter values selected for each segment thus accurately suited for each of the segments.

In an optional implementation form of the first and/or second aspects, an estimated insurance cost is calculated for a reminder of the current ride according to the adjusted insurance policy. Estimating the insurance cost may provide additional insurance data which may be used, for example, by the driver, the supervisor of the vehicle, the insurance company and/or the like.

In an optional implementation form of the first and/or second aspects, an insurance fee calculated for the adjusted insurance policy is presented to a driver of the vehicle. By presenting the insurance cost for the reminder of the ride according to the adjusted insurance policy, the driver may be aware of the insurance policy, in particular the cost applicable for the current ride. Base on the based on the presented insurance cost, the driver may take one or more actions, for example, select another driving profile to reduce the insurance cost and/or the like.

In an optional implementation form of the first and/or second aspects, the insurance policy is adjusted based on a risk estimation selected according to a value of one or more route attributes identified for a route selected for the current ride. This may allow further tuning the insurance policy for the exact driving conditions of the specific current ride as affected by the route attributes such as, for example, road conditions, environmental conditions (e.g. day/night, weather, etc.) and/or the like. This may allow further reducing and/or removing the insurance cost overhead applied due to the uncertainty involved with creating the insurance policy for a prolonged time period.

In an optional implementation form of the first and/or second aspects, the value of the one or more route attributes is identified by one or more of:
- Analyzing sensory data received from by one or more sensors mounted on the vehicle, the one or more sensors comprise a motion sensor, an imaging sensor, a ranging sensor and/or an environmental sensor.
- Analyzing map data of the geographical area of the current ride.
This may allow flexibility in obtaining the route attributes values from multiple sources that may be available for the vehicle current ride. Moreover, the route attributes data may be significantly more comprehensive as it is collected from diverse sources which may complement each other.

In an optional implementation form of the first and/or second aspects, a recommended driving profile is recommended to a driver of the vehicle. The recommended driving profile associated with an optimal insurance policy is selected according to one or more passenger preferences of the driver and/or one or more other passengers present in the vehicle during the current ride. The passenger preference(s) comprising a schedule, a type of the driver, a type of the at least one other passenger, an emotional mood of the driver and/or an emotional mood of the at least one other passenger. Suggesting to the driver the recommended driving profile (typically associated with the optimal insurance policy) may allow improved insurance terms for the current ride, for example, reduced insurance cost.

In an optional implementation form of the first and/or second aspects, the recommended driving profile is selected according to one or more passenger preferences. The one or more passenger preferences are defined by one or more of:
- Set by a driver of the at least partially autonomous vehicle.
- Obtained from one or more scheduling applications executed by a mobile device associated with the driver and/or with one or more other passengers present in the vehicle during the current ride.
- Determined by analyzing sensory data received from at least one sensor depicting the driver and/or the other passenger(s).
- Derived from one or more ride patterns of the driver identified using one or more machine learning algorithms.

Generating the recommended driving profile based on the passenger preference(s) may assure the recommended driving profile complies (meets) with the passenger preference(s). Obtaining the passenger preference(s) from a plurality of sources, either manual and/or automated may allow for flexibility in implementation of the dynamic insurance policy generation system as it may employ various implementations according to the vehicle's and/or driver capabilities. Moreover, automatically obtaining the passenger preference(s) may relief the driver from manually and/or personally specifying, inserting and/or presenting the passenger preference(s).

In an optional implementation form of the first and/or second aspects, the driving profile is selected according to a predefined insurance policy. Selecting the driving profile according to the predefined insurance policy may allow the driver to adapt the driving parameters of the current ride to the predefine insurance policy such that the insurance terms are fixed and the driving parameters set by the driving profile are adapted to meet the predefined insurance terms, in particular, the insurance cost.

In an optional implementation form of the first and/or second aspects, the one or more automated driving units are locked to prevent alteration of the driving profile thus preventing adjustment of the insurance policy. This may serve to prevent selecting a driving profile that may affect the insurance policy, for example, increase the insurance fee(s) and/or cost.

Unless otherwise defined, all technical and/or scientific terms used herein have the same meaning as commonly understood by one of ordinary skill in the art to which the embodiments described herein pertain. Although methods and materials similar or equivalent to those described herein can be used in the practice or testing of embodiments described herein, exemplary methods and/or materials are described below. In case of conflict, the patent specification, including definitions, will control. In addition, the materials, methods, and examples are illustrative only and are not intended to be necessarily limiting.

Implementation of the method and/or system of embodiments described herein can involve performing or completing selected tasks manually, automatically, or a combination thereof. Moreover, according to actual instrumentation and equipment of embodiments of the method and/or system described herein, several selected tasks could be implemented by hardware, by software or by firmware or by a combination thereof using an operating system.

For example, hardware for performing selected tasks according to embodiments described herein could be implemented as a chip or a circuit. As software, selected tasks according to embodiments described herein could be implemented as a plurality of software instructions being executed by a computer using any suitable operating system. In an exemplary embodiment described herein, one or more tasks according to exemplary embodiments of method and/or system as described herein are performed by a data processor, such as a computing platform for executing a plurality of instructions. Optionally, the data processor includes a volatile memory for storing instructions and/or data and/or a non-volatile storage, for example, a magnetic hard-disk and/or removable media, for storing instructions and/or data. Optionally, a network connection is provided as well. A display and/or a user input device such as a keyboard or mouse are optionally provided as well. It is to be understood that the features mentioned above and features yet to be explained below can be used not only in the respective combinations indicated, but also in other combinations or in isolation without departing from the scope of the present invention. Features of the above-mentioned aspects and embodiments may be combined with each other in other embodiments unless explicitly mentioned otherwise.

### BRIEF DESCRIPTION OF THE SEVERAL VIEWS OF THE DRAWINGS

Some embodiments described herein are described, by way of example only, with reference to the accompanying drawings. With specific reference now to the drawings in detail, it is stressed that the particulars shown are by way of example and for purposes of illustrative discussion of embodiments described herein. In this regard, the description taken with the drawings makes apparent to those skilled in the art how embodiments described herein may be practiced.

In the drawings:
FIG. 1 is a flowchart of an exemplary process of adapting a vehicle insurance policy according to a driving profile selected for a vehicle controlled by automated driving unit(s), according to some embodiments described herein; and
FIG. 2A and FIG. 2B are schematic illustrations of exemplary embodiments of a system for adapting a vehicle insurance policy according to a driving profile selected for a vehicle controlled by automated driving unit(s), according to some embodiments described herein.

### DETAILED DESCRIPTION

Some embodiments described herein relate to adapting a vehicle insurance policy for a vehicle controlled by automated control unit(s), and, more specifically, but not exclusively, to adapting a vehicle insurance policy for a vehicle controlled by automated control unit(s) according to a selected driving profile.

According to some embodiments, there are provided methods, systems and computer program products for automatically and dynamically adapting a vehicle insurance policy for a vehicle, for example, a car, a truck, a bus, a motorcycle and/or the like which is controlled by one or more automated control unit(s) according to a driving profile selected to set the automated driving unit(s) to control the vehicle during at least part of the current ride.

The vehicle may be partially autonomous, for example, "hands on" autonomous vehicle in which a driver of the vehicle and the automated driving unit(s) (e.g. cruise (speed) control, lane keeping system, gap keeping system, distance keeping system, etc.) share control over the vehicle. The vehicle may also be a fully autonomous vehicle, for example, "hands off', "eyes off' and/or "mind off' autonomous vehicle in which the automated driving unit(s) may have full control over the vehicle (the driver may be referred to as a "driver-passenger"). Optionally, the control over the vehicle may transition between the automated control modes as well as to a manual mode in which the driver has full control over the vehicle.

The driving profile may be set manually by one or more human parties, for example, the driver, a passenger, a supervisor of the vehicle (a parent, an employee, etc.), a traffic controller (e.g. a police officer, a traffic coordinator, etc.) and/or the like. Additionally, the driving profile may be set automatically by one or more device and/or system, for example, a device associated with the vehicle and/or the driver, for example, a mobile device, a navigation system and/or the automated driving unit(s) themselves. Optionally, the driving profile may be set by one or more automated traffic control systems which may control vehicle(s) traffic.

The driving profile may include values for one or more driving parameters, for example, a speed limit, an acceleration limit, a turning sharpness limit, a lane change abruptness limit, a minimal gap to other objects (e.g. vehicle, pedestrian, sidewalk, road shoulder, lane markings etc.), a breaking rapidness limit and/or the like which may be applied to the automated driving unit(s) for the current ride of the vehicle and/or part thereof. For active automated driving unit(s) having control over the vehicle, the value(s) of the driving parameter(s) may set actual control driving parameter(s). For example, in the automated driving unit(s) includes a cruise control system, the driving parameter(s) value(s) may define, for example, the maximum speed limit, the maximum acceleration level and/or the like. However, the driving parameter(s) may also define an alerting parameter(s) for automated driving unit(s) having alerting capability only. For example, in case the automated driving unit(s) includes a gap keeping alert system, the driving parameter(s) value(s) may define the minimal gap to another object (e.g. other vehicle(s), lane markings, etc.) which when crossed an alert is generated.

The driving profile may naturally define the driving parameter(s) according to the availability and capability of the automated driving unit(s). For example, in case the automated driving unit(s) includes a cruise control system, the driving profile may define, for example, the speed limit value, a maximal acceleration limit value, a minimal acceleration limit value and/or the like. In case the automated driving unit(s) includes a lane keeping system, the driving profile may define, for example, a distance (value) to the lane markings, a distance (value) from road shoulder and/or the like. In case of the fully autonomous vehicle, the driving profile may be more comprehensive and may further define values for additional driving parameters, for example, the turning sharpness limit value, the lane change abruptness limit value, the minimal gap value to other objects on the road and/or the like. The comprehensive driving profile(s) may be selected from a plurality of driving profiles created to emulate driving patterns typical to the owner(s) of the at least partially autonomous vehicle. The driving profiles may be further based on driving patterns derived from prototype driver(s) which may be either real drivers and/or artificially fabricated drivers.

An insurance policy of the vehicle may be created, generated and/or adjusted according to a risk estimation associated with the values defined for each of the driving parameters. The insurance policy may specify one or more terms, for example, a coverage scope, a liability scope, insurance fee(s) and/or the like. The risk estimation which is selected according to the driving parameter(s) may be obtained and/or retrieved from one or more insurance data records, for example, a database, a file, a list, a service and/or the like which may be available from one or more sources, for example, an insurance company. The risk estimation may be predefined and/or pre-calculated using one or more risk evaluation methods, techniques and/or algorithms, for example, a statistical analysis of vehicle incidents and/or accidents, a statistical analysis of a relation between the vehicle incidents and/or accidents and the value(s) of the driving parameter(s) and/or the like. Naturally, the risk estimation may be lower for safer driving profiles setting safe driving parameter(s) (e.g. low speed limit value, large gap value, etc.) compared to more risky driving profiles defining potentially more dangerous driving parameter(s) (e.g. high speed limit value, low gap value, etc.).

Optionally the risk estimation is selected (tuned) according to one or more route attributes of the route selected for the current ride (and/or part thereof) of the vehicle, for example, a road type, a road quality, a road condition (construction), traffic, timing (time/date), weather conditions, a type (and capabilities) of the vehicle, a type (and capabilities) of the automated driving unit(s) and/or the like.

The insurance policy may further serve as an authorization of the selected driving profile indicating that the selected driving profile may be applied to the automated driving unit(s) for the current ride (and/or part thereof) of the vehicle.

Optionally, the insurance policy terms, in particular the insurance fee(s) are presented to the driver.

Optionally, the driving profile may be changed (re-selected) during the current ride. The driving profile may be changed manually by the driver, a human traffic controller, etc. and/or automatically by one or more automated systems, for example, the automated driving unit, a navigation system, a weather control system, a traffic control system, etc. In such case, the insurance policy may be adjusted according to the newly selected driving profile. Moreover, one or more terms of the adjusted insurance policy, for example, an estimated insurance cost of the insurance policy may be calculated for a reminder of the current ride and may be presented to the driver. The estimated insurance cost may be calculated based on updated insurance fee(s) calculated according to the risk estimation associated with the values set for the driving parameter(s) by the new driving profile.

Optionally, a driving profile associated with a recommended (improved) insurance policy is recommended to the driver for the current ride and/or part thereof. The recommended driving profile may be selected to both present the improved insurance policy and comply with one or more passenger preferences, for example, a schedule, a routine of the passenger(s), a type of the driver, a type of the passenger(s), a mood of the driver and/or passenger(s) and/or the like. The passenger preference(s) may be obtained from one or more of a plurality of sources, for example, the passenger(s) themselves, an analysis of sensory data depicting the passenger(s), analysis of application data collected from application(s) executed by mobile device(s) used by the passenger(s), detected ride pattern(s) of the passenger(s) and/or the like.

Dynamically adapting the vehicle insurance policy for the vehicle may present significant advantages compared to currently existing methods. Creating the insurance policy, in particular calculating the insurance fee(s), premium and/or the like is typically based on data collected over a period of time. For non-at autonomous vehicles, the insurance policy may be adapted according to a driving history of the driver, for example involvement in vehicle incidents, accidents and/or the like. For the (at least partially) autonomous vehicles, the current methods may apply a relatively similar approach. The current methods may create and/or adjust the insurance policy according to sensory data (sensor readings) collected over time from sensor(s) installed in the vehicle. The sensory data may be statistically analyzed to identify driving patterns and estimate the risk associated with these driving patterns in order to select an appropriate insurance policy to be applied to the at least partially autonomous vehicle. This implementation of the insurance policy and/or insurance fee(s) adjustment may present several limitations. First, the sensory data needs to be constantly and continuously collected, at least for a minimum time period to establish a sufficient sensory data base suitable to detect the driving pattern(s) and select the appropriate insurance policy. Second, the insurance policy may be fixed and may therefore include a cost overhead which may result in incurring higher insurance fee(s) then actually required, at least for some rides of the vehicle. For example, assuming there are two "driver" passengers of a certain autonomous vehicle, each "driving" the vehicle at different times. Assuming a first "driver" of the two usually selects a safe driving profile while the second "driver" of the two usually selects a more reckless driving profile. Since the insurance policy is based on the analysis of the sensory data over a prolonged period of time, there is no way to know which driving profile is selected for each specific ride. The insurance policy, in particular the insurance premium and/or fee(s) may therefore include the overhead to compensate for the unknown driving patterns. A second limitation may relate to the cost overhead applied to overcome other unknown factors, for example, the route conditions, characteristics and/or attributes, for example, road condition(s), light condition(s), weather condition(s) and/or the like.

Dynamically adapting the insurance policy for the current ride and/or part thereof on the other hand may present significant flexibility for adapting an optimal insurance plan which may be the most suitable one for the current ride (or part thereof). This may be regarded as a policy per ride implementation, i.e. per ride insurance fee(s) calculation and payment. The insurance policy and/or insurance fee(s) may be therefore adapted for each ride according to the type of the "driver" and his selected driving profile. This may significantly decrease insurance costs since the insurance fee(s) may be accurately calculated automatically and dynamically for each specific ride (and/or part thereof) thus the fixed insurance cost overhead may be significantly reduced and/or completely removed. The dynamic adaptation of the insurance policy may optimally compliment a community vehicle model in which the vehicle may be shared by multiple drivers since the insurance policy may be automatically and dynamically adjusted per driver. Setting the driving profile automatically by a device associated with the driver (e.g. the mobile device, the navigation system, etc.) may further simplify the community vehicle model since the driving profile may be automatically selected without effort and/or intervention of the driver.

Moreover, the insurance policy and the insurance fee(s) may be further adapted according to the route conditions, characteristic(s) and/or attributes of the specific route selected for the specific ride, for example, the road condition(s), the light conditions(s), the weather conditions(s) and/or the like. For example, the insurance fee(s) may be lower for a sunny day in which the road(s) selected for the current ride are dry compared to the insurance fee(s) estimated for the same road(s) on a rainy day during which the road(s) may be wet. To further increase accuracy, the insurance policy and/or the insurance fee(s) may be adjusted along the route in response to changes in the route attributes, for example, change in road quality, weather change and/or the like. This may further allow reducing and/or removing the insurance cost overhead applied due to the uncertainty involved with creating the insurance policy for a prolonged time period.

Furthermore, recommending the driver a driving profile that entails the optimal insurance policy may further reduce the insurance cost. Selecting the recommended driving profile according to the passenger preference(s) may ensure that the selected driving profile meets the requirements of the passenger(s) while presenting the lowest insurance cost. By automatically obtaining the passenger preference(s), the driver may be relieved of manually and/or personally specifying, inserting and/or presenting the passenger preference(s).

Before explaining at least one embodiment in detail, it is to be understood that the described subject matter is not necessarily limited in its application to the details of construction and the arrangement of the components and/or methods set forth in the following description and/or illustrated in the drawings and/or the Examples. The described subject matter is capable of other embodiments or of being practiced or carried out in various ways.

The described subject matter may be a system, a method, and/or a computer program product. The computer program product may include a computer readable storage medium (or media) having computer readable program instructions thereon for causing a processor to carry out aspects of the described subject matter.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the embodiments described herein may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages.

The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the described subject matter.

Aspects of the described subject matter are described herein with reference to flowchart illustrations and/or block diagrams of methods, apparatus (systems), and computer program products according to embodiments of the described subject matter. It will be understood that each block of the flowchart illustrations and/or block diagrams, and combinations of blocks in the flowchart illustrations and/or block diagrams, can be implemented by computer readable program instructions.

The flowchart and block diagrams in the Figures illustrate the architecture, functionality, and operation of possible implementations of systems, methods, and computer program products according to various embodiments of the described subject matter. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

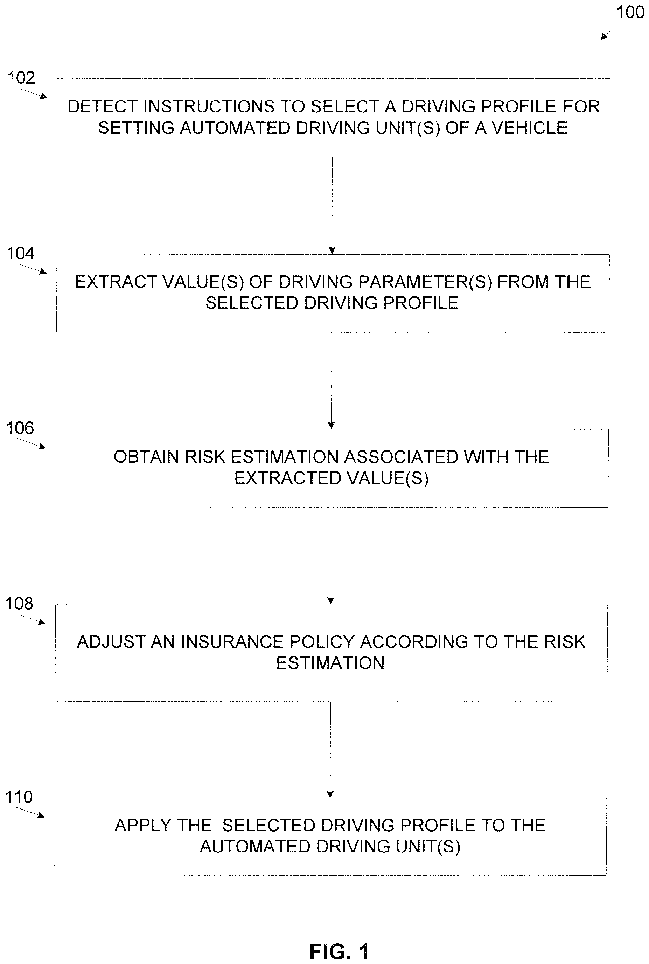

Referring now to the drawings, FIG. 1 is a flowchart of an exemplary process of adapting a vehicle insurance policy according to a driving profile selected for a vehicle controlled by automated driving unit(s), according to some embodiments described herein. A process 100 may be executed to automatically and dynamically adapt an insurance policy for a vehicle, for example, a car, a truck, a bus, a motorcycle and/or the like which is controlled by one or more automated driving units, for example, a cruise control, a breaking system, a gap keeping system, a lane keeping system, a steering control system and/or the like. The insurance policy may be adjusted according to a driving profile selected for a current ride and/or part thereof of the vehicle. The selected driving profile includes values for setting one or more driving parameters, for example, a speed limit, an acceleration limit, a turning sharpness limit, a lane change abruptness limit, a minimal gap to other objects on the road (e.g. vehicles, pedestrians, sidewalks, road shoulders, lane markings etc.), a breaking rapidness limit and/or the like. The values of the driving parameter(s) may be applied to the automated driving unit(s) controlling the current ride of the vehicle.

The values set for the driving parameter(s) are extracted from the driving profile and an insurance policy for the vehicle may be adjusted according to a risk estimation associated with each of the extracted driving parameter(s) value(s). The adjusted insurance policy may further serve as an authorization of the selected driving profile which may be applied to the automated driving unit(s) to control the current ride of the vehicle according to the selected driving profile.

The adjusted insurance policy may further include insurance fee(s) that may be subject and/or updated according to the adjusted insurance policy, in particular according to the risk estimation associated with the value(s) of the driving parameter(s) set by the driving profile.

Optionally, the insurance policy and/or the insurance fee(s) applied for the current ride are presented to a driver of the vehicle.

Optionally, the driving profile may be changed (re-selected) during the current ride, either manually (by the driver, vehicle supervisor, traffic controller, etc.) and/or automatically by one or more automated systems (e.g. the automated driving unit, a navigation system, a weather control system, a traffic control system, etc.). In such case, the insurance policy may be adjusted according to the newly selected driving profile. Moreover, an estimated insurance cost of the insurance policy may be calculated for a reminder of the current ride and may be presented to the driver. The estimated insurance cost may be calculated based on updated insurance fee(s) calculated according to the risk estimation associated with the value(s) of the driving parameter(s) set (defined) by the new driving profile.

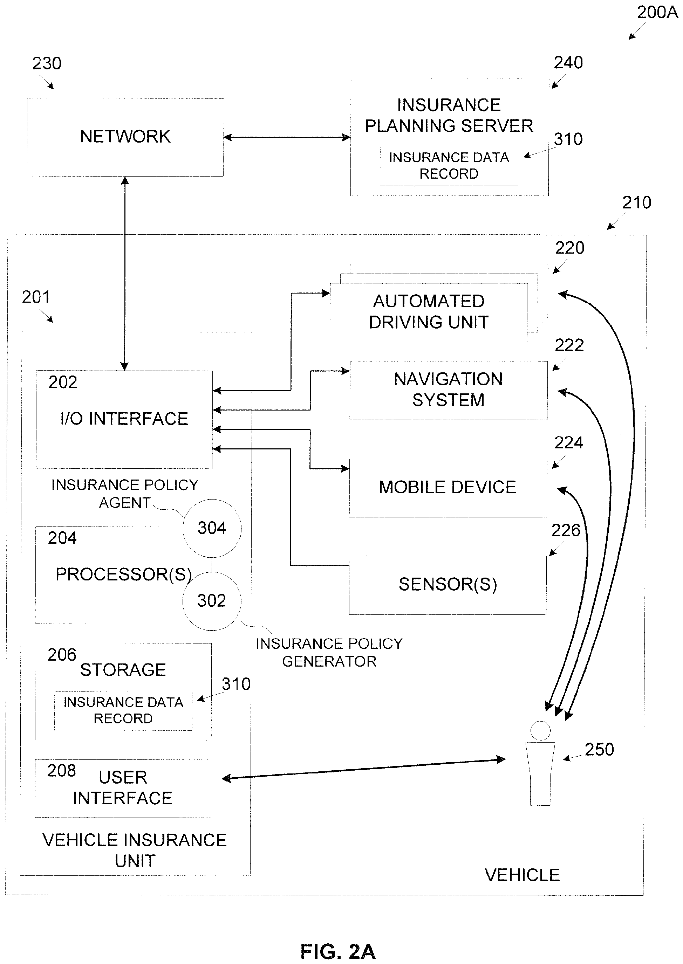

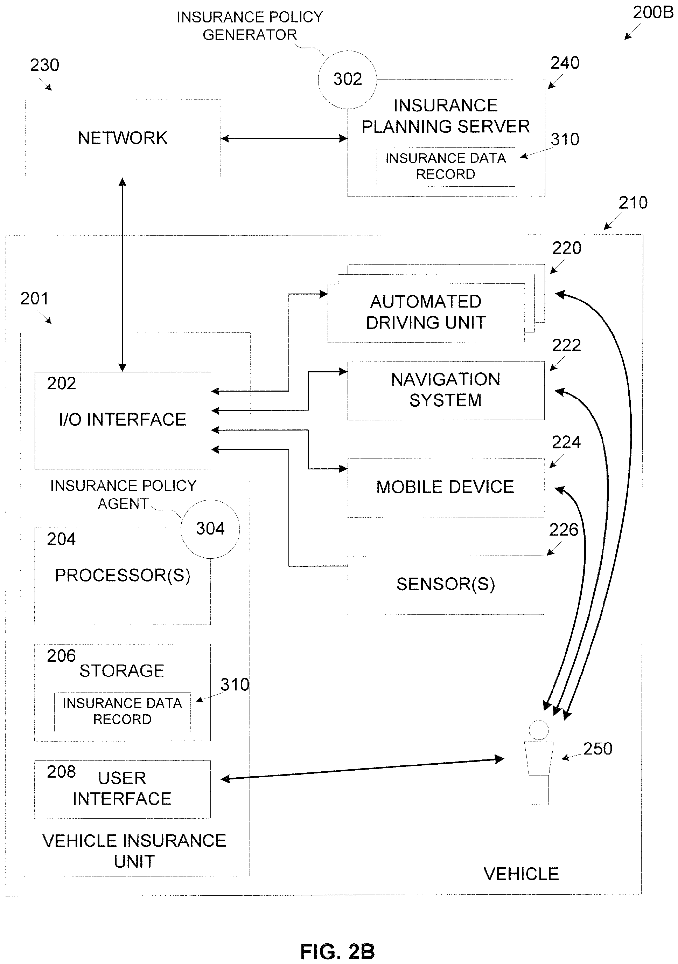

Reference is also made to FIG. 2A and FIG. 2B, which are schematic illustrations of exemplary embodiments of a system for adapting a vehicle insurance policy according to a driving profile selected for a vehicle controlled by automated driving unit(s), according to some embodiments described herein. Exemplary systems 200A and 200B include a vehicle insurance unit 201 which may be installed, attached and/or integrated in a vehicle 210 controlled by a driver 250 and/or one or more automated driving units 220.

The automated driving units 220 may include, for example, a cruise control system controlling a speed and/or acceleration of the vehicle 210, a gap keeping system controlling and/or alerting of a gap to other objects (e.g. vehicle, pedestrian, road shoulder, sidewalk, etc.), a lane keeping system for maintaining the vehicle 210 in lane and/or alerting of a deviation from the lane, a steering system controlling steering of the vehicle 210, a fully autonomous driving system controlling the movement (speed, acceleration and direction) of the vehicle 210 and/or the like. The automated driving unit(s) 220 may be active control systems which may actually control the movement of the vehicle 210, for example, the cruise control system controlling the speed and/or acceleration, the fully autonomous driving system controlling the actual movement of the vehicle 210 and/or the like. The automated driving unit(s) 220 may also include alerting systems which may alert of various driving conditions, for example, a lane keeping system which may alert the driver 250 when the vehicle 210 deviates from its designated lane, a gap keeping system which may alert the driver 250 when the vehicle 210 is too close to another object(s) on the road and/or the like.

The vehicle insurance unit 201 may include an Input / Output (I/O) interface 202, a processor(s) 204 and storage 206. The I/O interface 202 may include one or more point-to-point interfaces, wired and/or wireless, for example, a serial interface, a Universal Serial Bus (USB) interface, a Controller Area Network (CAN), a Bluetooth interface, a Radio Frequency (RF) interface and/or the like. The I/O interface 202 may also provide one or more network interfaces, wired and/or wireless, for example, a Local Area Network (LAN), a Wide Area Network (WAN), a Metropolitan Area Network (MAN), a cellular network and/or the like for connecting to one or more networks 230. The processor(s) 204, homogenous or heterogeneous, may be arranged for parallel processing, as clusters and/or as one or more multi core processor(s). The storage 206 may include one or more non-transitory persistent storage devices, for example, a hard drive disk (HDD), a Solid State Disk (SSD) a Flash array and/or the like. The storage 206 may also utilize one or more volatile memory devices, for example, a Random Access Memory (RAM) device and/or the like for temporary storage of code and/or data. One or more data structures, for example, an insurance data record 310, for instance, a database, a file, a list, a table and/or the like may be stored in the storage 206. The insurance data record 310 may include for example, insurance data, risk estimation data, insurance fees, cost formulation tools and/or the like.

Through the I/O interface 202, either the point-to-point interface(s) and/or the network interface(s), the vehicle insurance unit 201 may connect to one or more external devices, for example, the automated driving unit(s) 220, a navigation system 222, one or more mobile devices 224 and/or the like. The mobile device(s) 224, for example, a Smartphone, a tablet, a Smartwatch, a wearable device, a mobile computer and/or the like may typically be associated with the driver 250 and optionally with one or more passengers riding the vehicle 210. The navigation system 222 may provide route guidance to the automated driving unit(s) 220. In some embodiments the navigation system 222 may be integrated with one or more of the automated driving units 220 and/or the mobile device 224.

Through the I/O interface 202, either the point-to-point interface(s) and/or the network interface(s), the vehicle insurance unit 201 may further connect to one or more sensors 226 of the vehicle210, for example, an imaging sensor, a ranging sensor, a motion sensor, an environmental sensor and/or the like. The imaging sensor(s) may include, for example, a camera, an Infrared sensor, a video camera, a night vision sensor and/or the like. The ranging sensor(s) may include, for example, a Light Detection and Ranging (LIDAR) sensor, radar, an ultra-sonic sensor and/or the like. The motion sensor(s) may include, for example, a Global Positioning system (GPS) sensor, a gyroscope, an accelerometer, an Inertial Measurement Unit (IMU) sensor, an elevation sensor and/or the like. The environmental sensor(s) may include, for example, a humidity sensor, a light sensor, a temperature sensor, a clock and/or the like. The I/O interface 202 may further allow the vehicle insurance unit 201 to connect to one or more Vehicle to Anything (V2X) communication channels of the vehicle 210, for example, Vehicle to Vehicle (V2V), Vehicle to Infrastructure (V2I), Vehicle to Pedestrian (V2P), Vehicle to device (V2D), Vehicle to Grid (V2G) and/or the like. Through the V2X) communication channel(s), the vehicle insurance unit 201 may communicate with one or more other entities, for example, another vehicle, a transportation infrastructure object, for example, a traffic light, a road sign, a road perimeter system and/or the like.

The I/O interface 202, specifically, the network interface(s) of the I/O interface 202 may facilitate network connectivity of the vehicle insurance unit 201 to an insurance planning server 240, for example, a server, a processing node, a cluster of processing nodes and/or the like.

Optionally, the vehicle insurance unit 201 includes a user interface 208 comprising one or more human-machine interfaces, for example, a keyboard, a pointing device, a touch surface, a display, a touch screen, an audio interface and/or the like for interacting with the driver 250. For example, the user interface 208 may be used to present content to such as, for example, a graphic user interface (GUI) to the driver 250, where the GUI may be utilized through the human-machine interface(s), for example, the display, the touch screen and/or the like.

Naturally, the driver 250 may also interact with one or more of the external devices, i.e., the automated driving unit(s) 220, the mobile device(s) 224 and/or the navigation system 222 through user interfaces such as the user interface 208 provided by the external device(s).

The processor(s) 204 may execute one or more software modules, for example, a process, a script, an application, an agent, a utility and/or the like which comprise a plurality of program instructions stored in a non-transitory medium such as the storage 206.

As shown in systems 200A and/or 200B, the processor(s) 204 may execute, for example, an insurance policy agent 304 software module which may monitor the automated driving unit(s) 220 and/or interaction between the automated driving unit(s) 220 and the driver 250 and/or one of the external systems, for example, the mobile device(s) 224 and/or the navigation system 222. The insurance policy agent 304 may be configured to detect one or more instructions issued by the automated driving unit(s), the driver 250 and/or one of the external devices to select a driving profile to be applied to the automated driving system(s) 222. The insurance policy agent 304 may also be configured to detect one or more instructions issued by the driver 250 using the user interface 208 of the vehicle insurance unit 201 to select the driving profile.

In some embodiments, as shown in the system 200A, the processor(s) 204 may also execute an insurance policy generator 302 software module which may be configured to generate, adjust and/or calculate an insurance policy for at least a current ride of the vehicle 210. The insurance policy agent 304 may communicate with the insurance policy generator 302 through one or more software interfaces, for example, an Application Programming Interface (API), a messaging protocol, a system call of an Operating System (OS) of the vehicle insurance unit 201 and/or the like. Optionally, in such deployment(s), the insurance policy agent 304 may be integrated with the insurance policy generator 302. The insurance policy generator 302 executed locally by the vehicle insurance unit 201 may further communicate with the insurance planning server 240 to obtain insurance data, for example, the insurance data record 310 which may be stored at the insurance planning server 240.

In some embodiments, as shown in system 200B, the insurance policy generator 302 is executed by the insurance planning server 240. The insurance policy agent 304 may communicate over the network(s) 230 with the insurance planning server 240, in particular with the insurance policy generator 302 executed by the insurance planning server 240. In such deployment(s), the insurance data, for example, the insurance data record 310 may naturally be stored at the insurance planning server 240.

Optionally, the insurance planning server 240 and/or part thereof (e.g. the insurance data record 310) is implemented as a cloud based platform utilizing one or more cloud services, for example, cloud computing, cloud storage and/or the like. Furthermore, one or more of the software modules, for example, the insurance policy generator 302 may be implemented as a cloud based service and/or platform, for example, software as a service (SaaS), platform as a service (PaaS) and/or the like.

Optionally, the vehicle insurance unit 201 is integrated with one or more of the external devices. For example, the vehicle insurance unit 201 may be integrated with one or more of the automated driving units 220 such that the automated driving unit(s) 220 executes the insurance policy agent 304 and/or the insurance policy generator 302. In another example, the vehicle insurance unit 201 is implemented by the mobile device(s) 224 such that the mobile device(s) 224 executes the insurance policy agent 304 and/or the insurance policy generator 302. In another example, the vehicle insurance unit 201 is implemented by the navigation system 222 such that the navigation system 222 executes the insurance policy agent 304 and/or the insurance policy generator 302.

As shown at 102, the process 100 starts with the insurance policy agent 304 detecting an instruction to select the driving profile to be applied to the automated driving unit(s) 220 for controlling the vehicle 210 during a current ride and/or part thereof.

The instruction to select the driving profile may be issued manually and/or automatically. The manual instruction to select the driving profile may be issued by one or more human operators, for example, the driver 250. The driver 250 may use the user interface 208 of the vehicle insurance unit 201, the user interface 208 of the automated driving unit(s) 220, the user interface 208 of the mobile device 224, the user interface 208 of the navigation system 222 and/or the like to select the driving profile. In some embodiments, the mobile device(s) 224 and/or the navigation system 222 may execute an application to receive the selection instruction from the driver 250 and forward it to the automated driving unit(s) 220 and/or to the vehicle insurance unit 201. Optionally, one or more other human operators, for example, a traffic controller, a supervisor of the vehicle and/or the like may issue the instruction to select the driving profile. For example, a traffic controller controlling the traffic for at least part of the route of the current ride of the vehicle 210 may remotely issue the instruction to select the driving profile which may be received by the vehicle insurance unit 201 through over the network(s) 230. In another example, the supervisor of the vehicle 210, for example, an owner, a fleet manager, an employer and/or the like may issue the instruction to select the driving profile which may be received by the vehicle insurance unit 201 through over the network(s) 230.

The automatic issue of the instruction to select the driving profile may originate from one or more automated systems. For example, one or more of the external devices, for instance, the automated driving unit(s) 220, the mobile device(s) 224 and/or the navigation system 222 may automatically issue the instruction to select the driving profile. For example, the mobile device(s) 224 may execute an application that may communicate with the automated driving unit(s) 220. The application may store user preferences of the driver 250, in particular driving preferences, for example, one or more driving profiles. Once the driver 250 enters the at least partially autonomous vehicle 210, the application executed by the mobile device(s) 224 associated with the driver 250 may automatically instruct the automated driving unit(s) 220 to apply one of the stored driving profiles. In another example, the automated driving unit(s) 220 and/or the navigation system 222 may store one or more of the driving preferences. The stored driving preference may optionally be associated with specific routes and/or specific drivers 250. Once the driver 250 enters and/or turn on the at least partially autonomous vehicle, the application executed by the navigation system 222 may automatically instruct the automated driving unit(s) 220 to apply one of the stored driving profiles. In another example, the automatic selection of the driving profile may originate from one or systems outside the vehicle 210, for example, an automatic traffic control system which controls the traffic for at least part of the route of the current ride of the vehicle 210.

The insurance policy agent 304 may detect the instruction to select the driving profile by continuously and/or periodically communicating with the external devices, i.e. the automated driving unit(s) 220, the mobile device(s) 224, the navigation system 222 and/or the like as well as with the traffic control system. Additionally and/or alternatively, the insurance policy agent 304 may detect the instruction by continuously and/or periodically monitoring the I/O interface 202 and/or the user interface 208 of the vehicle insurance unit. Naturally, in case the vehicle insurance unit 201 is integrated with one of the external devices, for example, the automated driving system(s) 220, the mobile device 224 and/or the navigation system 222, the insurance policy agent 304 may detect the instruction by monitoring the I/O interface 202 and/or the user interface 208 of the respective external device.

The selected driving profile may set, dictate and/or define values for one or more driving parameters that may be applied to the automated driving unit(s) 220 to control the vehicle 210 during the current ride and/or part thereof. The driving parameters may include, for example, a speed limit, an acceleration limit, a turning sharpness limit, a lane change abruptness limit, a minimal gap to other objects (e.g. vehicles, sidewalk, road shoulder etc.), a breaking rapidness limit and/or the like.

Naturally, the driving profile, in particular the value of the driving parameter(s) is set according to the type and/or capabilities of the automated driving unit(s) 220. In case the vehicle 210 is only partially autonomous, the selected driving profile may set the values for the driving parameter(s) which may be applicable for the automated driving unit(s) 220 available in the vehicle 210. For example, assuming the vehicle 210 has a cruise control system while steering is controlled by the driver 250, the values set by the driving profile for the driving parameter(s) may define, for example, a speed limit value. In another example, assuming the at least partially autonomous vehicle 210 has a gap keeping alerting system, the values set by the driving profile for the driving parameter(s) may define, for example, a minimal gap value to other objects such that when the gap is below the minimal gap value, the gap keeping alerting system will generate an alert. In case the vehicle 210 is fully autonomous, the automated driving unit(s) 220 may have full control over the autonomous vehicle 210 with the driver 250 being merely a passenger. In such case while the driver 250 does not actually drive the vehicle 210, the driving profile may be selected to facilitate a certain one of a plurality of driving styles, for example, normal driving, extra safe driving, expedited driving, sport style driving, urgency driving and/or the like.

The driving profile may be selected according to one or more passenger preferences relating to the current ride, for example, a schedule, a type of the driver 250 and/or of the passenger(s), an emotional mood of the driver 250 and/or of the passenger(s) and/or the like. For example, assuming the driver 250 is in a hurry to reach a certain destination, the driving profile may be selected to define, for example, a higher speed limit value, a higher acceleration limit value, a reduced value for the gap to other vehicles and/or the like. In another example, assuming little children are present in the vehicle 210, the driving profile may be selected to define an extra safe driving style, for example, a lower speed limit value, a lower acceleration limit value, an increased value for the gap to other vehicles and/or the like.

The driving profile may be selected from a plurality of driving profiles. Optionally, the driving profile(s) emulates driving pattern(s) of one or more supervisors of the vehicle 210, for example the owner, the supervisor, the fleet manager, the employer and/or the like. The driving profile(s) may also emulate driving patterns which are derived from one or more prototype drivers, either real driver(s) and/or artificially created prototype drivers.

After detecting the instruction to select the driving profile, the insurance policy agent 304 may capture the selected driving profile and forward it to the insurance policy generator 302.

In case the insurance policy generator 302 is executed locally at the vehicle insurance unit 201 as shown in the system 200A, the insurance policy agent 304 may use one or more software interfaces to provide the driving profile to the insurance policy generator 302, for example, a system call, an operation system service, an API function, the local communication protocol and/or the like. In case the insurance policy generator 302 is executed by the insurance planning server 240 as shown in the system 200B, the insurance policy agent 304 may transmit the selected driving profile to the insurance policy generator 302 over the network(s) 230.

Optionally, the insurance policy agent 304 provides the insurance policy generator 302 values for one or more route attributes identified for the route of the current ride of the vehicle210. The route attribute(s), for example, a road type, a road quality, a traffic volume, a road construction, a road risk level and/or the like may affect the risk estimation for the current ride and the insurance policy generator 302 may therefore evaluate these route attribute(s) when generating the insurance policy for the vehicle210 for the current ride.

The insurance policy agent 304 may collect the values of the route attribute(s) by analyzing data from one or more of a plurality of sources, for example, map data, sensory data and/or the like. The insurance policy agent 304 may retrieve map data, for example, from the navigation system 222. The insurance policy agent 304 may further get the planned route for the current ride from the navigation system 222. The insurance policy agent 304 may analyze the planned route and extract the values of the route attribute(s) identified for the selected route. For example, by analyzing the map data, the insurance policy agent 304 may determine that a road selected for the current ride is a high quality three lane highway with good visibility. In another example, based on the analysis of the map data, the insurance policy agent 304 may determine that construction is conducted in one or more segments of a road selected for the current ride. In another example, based on the analysis of the map data, the insurance policy agent 304 may determine that a road selected for the current ride is a single lane downhill road having multiple curves and limited visual sight at one or more segments of the road.

The insurance policy agent 304 may also analyze sensory data collected from one or more of the sensors 226 to determine the values of the route attribute(s). The insurance policy agent 304 may connect directly to the sensor(s) 226 and/or communicate with the automated driving unit(s) 220, which is typically connected to the sensor(s) 226 to collect the sensory data. Based on analysis of the sensory data, the insurance policy agent 304 may identify the value of one or more of the route attributes. For example, the insurance policy agent 304 may analyze motion data received from the motion sensor(s), for example, steering wheel angle changes to determine the road selected for the current ride is a downhill road having multiple curves. In another example, the insurance policy agent 304 may analyze range data received from the range sensor(s) and/or the imaging sensor(s), for example, presence of other vehicles on the road selected for the current ride to determine a value of the level of traffic occupying the road. The route attribute(s) value(s) determined by the insurance policy agent 304 based on the analysis of the sensory data may further include values for one or more environmental attributes associated with the current ride, for example, timing (time/date) attribute, a weather attribute and/or the like.

As shown at 104, the insurance policy generator 302 may analyze the driving profile and extract the values set for the driving parameter(s) by the driving profile. The insurance policy generator 302 may further analyze the route attribute(s) value(s) in case they are received form the insurance policy agent 304.

As shown at 106, the insurance policy generator 302 may obtain insurance data, for example insurance data, risk estimation data, insurance fees, cost formulation tools and/or the like. For example, the insurance policy generator 302 may retrieve the insurance data from one or more insurance data records such as the insurance data record 310. In case the insurance policy generator 302 is executed locally by the vehicle insurance unit 201, the insurance data record 310 may typically be stored locally in the storage 206. Additionally and/or alternatively, the insurance data record 310 is stored in the insurance planning server 240 and the insurance policy generator 302 accesses the insurance planning server 240 over the network 230 to obtain the insurance data. In case the insurance policy generator 302 is executed by the insurance planning server 240, the insurance data record 310 may typically be stored in the insurance planning server 240. Optionally, the insurance data record 310 is available (over the network 230) from one or more other networked resources, for example, another server, a cloud service and/or the like. The insurance data record 310 may be continuously and/or periodically updated to reflect changes in the insurance data, for example, updated insurance fee(s), adjusted risk estimation data and/or the like. In case the insurance data record 310 is stored in the storage 206, the vehicle insurance unit may periodically access the insurance planning server 240 and check for an updated insurance data record 310.

The risk estimation may be defined for one or more of the driving parameters according to the value(s) set for the driving parameter(s) in the selected driving profile. The risk estimation may be predefined and/or pre-calculated for the driving parameters values using one or more methods, for example, a formulation, a statistical analysis of incidents historical data analysis and/or the like. Based on formulation calculation, for example, the risk estimation may be proportional to the speed limit parameter value such that the higher the speed limit value, the higher is the risk estimated for an incident and/or an accident to occur during a ride of the vehicle 210 while the automated driving unit(s) 220 applies the higher speed limit value. In another example, the risk estimation may be reveres proportional to the minimal gap parameter value such that the higher the minimal gap value, the lower is the risk estimated for an incident and/or an accident to occur during a ride of the vehicle 210 while the automated driving unit(s) 220 applies the higher minimal gap value. In another example, based on statistical analysis of car accidents, a correlation may be identified between speed value(s) and a probability for being involved in a car accident. The risk estimation may thus be calculated according to the identified correlation.

The risk estimation assigned to each of the extracted driving parameters' values may be further selected to reflect additional factors of the current ride of the vehicle 210.

The risk estimation may be selected to reflect the geographical area and/or the route attribute(s) of the current ride of the vehicle 210. For example, the risk estimation for a given value of the speed limit parameter may be higher for a ride of the vehicle 210 in a geographical area in which the accident events rate is higher compared to the risk estimation for the same speed limit value for a ride in a geographical area presenting a lower accident events rate. In another example, assuming a first road is known as a dangerous road in which a lot of accidents occur compared to a second road, the risk estimation for a ride of the vehicle 210 through the first road may be higher compared to the risk estimation for a ride with the same values of the driving parameters through the second road. In another example, the risk estimation may be higher for a ride of the vehicle 210 during high traffic time (e.g. rush hour) compared to the same ride with the same values of the driving parameters during a low traffic time at which the road may be significantly less occupied.

The risk estimation may further be selected to reflect the environmental attribute(s) of the ride of the vehicle 210, for example, the timing (time/date) attribute, the weather attribute and/or the like. For example, the risk estimation may be higher for a ride of the vehicle 210 at night compared to the same ride with the same driving parameter(s) value(s) during the day when visibility is better. In another example, the risk estimation may be higher for a ride of the vehicle 210 during rainy weather at which the road is wet and potentially slippery compared to the same ride with the same driving parameter(s) value(s) during a sunny (no rain) weather at which the road may be dry presenting increased road traction.

The risk estimation may also be selected to reflect one or more attributes of the vehicle 210 and/or the automated driving unit(s) 220. For example, for the same ride with similar driving parameter(s)' value(s), the risk estimation may be higher for a vehicle 210 having a degraded breaking system compared to the risk estimation for another vehicle 210 having an improved breaking system. In another example, for the same ride with same driving parameter(s)' value(s), the risk estimation may be higher for a vehicle 210 utilizing inferior automated driving unit(s) 220 compared to the risk estimation for another vehicle 210 utilizing a superior automated driving unit(s) 220. In another example, for the same ride with same driving parameter(s) value(s), the risk estimation may be higher for a 210 having a bad accident track record compared to the risk estimation for another vehicle 210 which was never involved in an accident.

As shown at 108, the insurance policy generator 302 may adjust an insurance policy for the vehicle 210 according to the estimated risk associated with the driving parameter(s) value(s) extracted from the selected driving profile. The insurance policy generator 302 may generate, adjust and/or adapt the insurance policy for the vehicle 210 by aggregating the risk estimation(s) associated with the driving parameter(s) value(s). The insurance policy may specify one or more terms, for example, a coverage scope, a liability scope, insurance fee(s) and/or the like adjusted for the selected driving profile. Naturally, when the risk estimation for the driving parameter(s) value(s) is high the terms of the insurance policy created for the current ride, in particular the insurance fee may rise. On the other hand, when the risk estimation for the driving parameter(s) value(s) is low the insurance fee may drop.

Creation of the insurance policy by the insurance policy generator 302 may imply that the selected driving profile is approved and may be applied to the automated driving unit(s) 220. Optionally, the insurance policy generator 302 may be configured to decline driving profiles which define driving parameter(s) value(s) that are not allowed. For example, the insurance policy generator 302 may be configured to decline driving profiles in which the speed limit parameter is assigned a value that is above the speed limit as stated and/or enforced by law of the certain geographical area in which the current ride takes place. In another example, the insurance policy generator 302 may be configured to decline certain driving profiles for certain vehicles 210, for certain automated driving units 220 and/or for certain drivers 250.

The insurance policy generator 302 may provide the generated insurance policy to the insurance policy agent 304. In case the insurance policy generator 302 is executed locally at the vehicle insurance unit 201 as shown in the system 200A, the insurance policy generator 302 may use the software interface(s) to provide the insurance policy to the insurance policy agent 304. In case the insurance policy generator 302 is executed by the insurance planning server 240 as shown in the system 200B, the insurance policy generator 302 may transmit the generated insurance policy to the insurance policy agent 304 over the network(s) 230.

As shown at 110, the insurance policy agent 304 may apply the selected and approved driving profile to the automated driving unit(s) 220 such that the automated driving unit(s) 220 may control the current ride of the vehicles 210 according to the driving parameter(s) values set (defined) by the driving profile. The insurance policy generated based on the selected driving profile is therefore enforced for the current ride.

Optionally, the automated driving unit(s) 220 and/or the insurance policy agent 304 is locked thus preventing alterations to a predefined driving profile set for the automated driving unit(s) 220 and further preventing changes to the insurance policy applicable to the vehicle 210. Such locking may be initiated by, for example, the supervisor of the vehicle 210. For example, a parent may lock the automated driving unit(s) 220 and/or the insurance policy agent 304 to prevent the driver 250, for example, a young driver and/or a new driver from altering the driving profile. In another example, an employer may lock the automated driving unit(s) 220 and/or the insurance policy agent 304 to prevent the driver 250, for example, an employee from altering the driving profile.

Optionally, the insurance policy agent 302 presents one or more details of the generated insurance policy, for example, the coverage scope, the liability scope, the insurance fee(s) and/or the like to the driver 250 and/or the passengers through the user interface 208. Naturally, in case the vehicle insurance unit 201 is integrated with one or the external devices, i.e. the automated driving unit(s) 220, the mobile device 2224, the navigation system 222, the presentation may be done through the user interface 208 of the respective external device.

In some embodiments, the driving profile may be adjusted during the current ride such that the current ride of the vehicle 210 is divided to one or more segments. This implies that different driving profiles may be applied to the automated driving unit(s) 220 for the different ride segments. As described before, the instruction may be issued manually and/or automatically by the driver 250, the human traffic controller, the external device(s), e.g. the automated driving unit(s) 220, the mobile device 224 and/or the navigation system 222, the outside systems, e.g. the automated traffic control system and/or the like. For example, the driver 250 may suddenly be informed of an incident which requires his immediate presence at some location. The driver 250 may adjust the driving profile to set value(s) for the driving parameter(s) to expedite the ride to the new location. In another scenario, the navigation system 222 may select a new route to arrive at a new location. The new route may involve changes in the route attribute(s) which may affect one or more of the driving parameter(s) and/or the risk estimation associated with the values of the driving parameter(s). In another example, the weather system may detect a change in the environmental attribute(s), for example, rain, fog and/or the like. The new environmental attribute(s) may affect one or more of the driving parameter(s) and/or the risk estimation associated with the value(s) of the driving parameter(s). In another example, one or more passengers, for example, children may be picked up at one or more points along the ride. This may imply a change in the passenger preferences which may affect the values set for one or more of the driving parameters. Such changes to the route attribute(s), environmental attributes passenger preferences and/or the like may trigger an instruction to adjust the driving profile.

Every time the insurance policy agent 304 detects an instruction to adjust the driving profile while the current ride is already in progress, the process 100 may be repeated for the newly selected driving profile. Optionally, the insurance policy agent 302 calculates an estimated insurance cost for a reminder of the current ride based on the insurance policy generated according to the selected driving profile. Since the driver 250 may change the driving profile during the ride, the insurance policy generator 302 may adjust the insurance policy and different insurance fee(s) may apply. The insurance policy agent 302 may therefore estimate the insurance cost entailed by the adjusted insurance policy. The insurance policy agent 302 may further present to the driver 250 and/or to the passenger(s) the detail(s) of the adjusted insurance policy, in particular the insurance cost estimated for the reminder of the current ride.

In some embodiments, a certain driving profile may be recommended to the driver 250 for the current ride and/or part thereof. The insurance policy generator 302 (coupled with the insurance policy agent 304 for interacting with the driver 250) may recommend the driver 250 a certain driving profile setting value(s) for the driving parameter(s) that may be present improved terms of the insurance policy generated for the current ride. For example, the insurance policy generated for the current ride when using the recommended driving profile may provide higher coverage, less self-liability, reduced insurance fee(s) and/or the like. The insurance policy generator 302 may select the recommend driving profile according to one or more of the passenger preferences, for example, the schedule, the type of the driver 250, the type of the passenger(s), the emotional mood of the driver 250, the emotional mood of the passenger(s) and/or the like. The insurance policy agent 304 may collect the passenger preference(s) from one or more sources, for example, passenger inserted data, data available from the mobile device(s) 224, the automated driving system(s) 220, the navigation system 222, analysis of sensory data collected from the sensor(s) 226 and/or the like.

The driver 250 may insert manually the passenger preference(s), for example, a driving style preference, for example, a sport style driving. The insurance policy agent 304 may communicate with the navigation system to identify the route and destination selected for the current ride. Based on the selected destination received from the insurance policy agent 304, the insurance policy generator 302 may evaluate alternate routes, arrival times and/or the like and recommend an optimal insurance policy for the current ride during which the sport style driving profile is applied.

The insurance policy agent 304 may communicate with the mobile device 224 associated with the driver 250 and/or the passenger(s) to collect the passenger preference(s), for example, scheduling information. The insurance policy agent 304 may communicate with one or more application executed by the mobile device(s) 224 associated with the driver 250, for example, a scheduling application, a task management application, a social media application and/or the like to retrieve the scheduling information. Based on the scheduling information received from the insurance policy agent 304, the insurance policy generator 302 may evaluate routes, arrival times, driving profiles and/or the like and recommend an optimal insurance policy for the current ride that will meet the arrival time(s) retrieved from the scheduling information.

The insurance policy agent 304 may analyze sensory data, for example, imaging data collected from imaging sensors depicting the interior of the vehicle 210 to identify the passenger preference(s), for example, the emotional mood of the driver 250 and/or of the passenger(s), the type of the driver 250 and/or of the passenger(s), the number of the passenger(s) and/or the like. Based on the passenger preference(s) received from the insurance policy agent 304, the insurance policy generator 302 may evaluate routes, arrival times, driving profiles and/or the like and recommend an optimal insurance policy for the current ride that accommodate the passenger preference(s). For example, the insurance policy agent 304 may identify little children as the type of the passenger for the current ride. Based on the type of the passenger(s) received from the insurance policy agent 304, the insurance policy generator 302 may recommend an extra safe driving profile for the current ride which may produce the optimal insurance policy. In another example, the insurance policy agent 304 may identify, based on analysis of the imaging data, that the driver 250 is stressed (emotional mood). Based on the indication of the stressed emotional mood received from the insurance policy agent 304, the insurance policy generator 302 may recommend the driver 250 to use a normal driving profile for a pleasant current ride where the normal driving profile may present the optimal insurance policy.

The insurance policy agent 304 may further apply one or more machine learning algorithms to analyze ride information to identify one or more ride patterns of the driver 250. Based on analysis of the ride pattern(s), the insurance policy agent 304 may detect one or more passenger preferences, for example, a schedule, a routine, a favorite driving profile, a typical passenger type and/or the like. Based on the passenger preference(s) identified from the ride pattern(s), the insurance policy generator 302 may generate an optimal insurance policy which applies a driving profile that complies with the identified passenger preference(s). For example, assuming the using the machine learning algorithm(s) a morning ride pattern is detected which correlates to a ride of the driver 250 to the office every weekday morning arriving at the office at approximately 08:30. Based on the detected typical arrival time, the insurance policy generator 302 may recommend a driving profile, for example, the normal driving style driving profile which may produce an optimal insurance policy complying with the identified passenger preference(s), i.e. the 08:30 arrival time.

Optionally, the insurance policy generator 302 may select a certain driving profile according to a predefined and/or selected insurance policy. The insurance policy generator 302 may analyze the predefined insurance policy and select a driving profile dictating driving parameter(s) values which are associated with risk estimations that comply with the terms of the predefined insurance policy. For example, the driver 250 may be associated with a certain insurance policy. The certain insurance policy may be provided to the insurance policy generator 302. The insurance policy generator 302 may then select a driving profile for the current ride that sets driving parameter(s)' value(s) that fits the certain insurance policy. For example, assuming the certain insurance policy defines a certain maximal insurance fee(s), the insurance policy generator 302 may select a driving profile setting driving parameter(s) values which are associated with risk estimations that produce insurance fee(s) which are lower or equal to the maximal insurance fee(s). For example, in order to lower insurance fee(s) (to be lower than the maximal insurance fee(s)) the driving profile selected by the insurance policy generator 302 may dictate a certain maximum speed limit value which is associated with low risk estimation and may therefore produce low insurance fee(s).

The certain insurance policy may be provided to the insurance policy generator 302 manually by the driver 250 and/or automatically by one or more of the external device, for example, the mobile device 224 associated with the driver 250. In some scenarios, multiple drivers 250 may share the at least partially autonomous vehicle 210, for example, in a company vehicle fleet, in a community vehicle model in which the driver 250 orders a vehicle and/or the like. In such scenario(s), the mobile device(s) 224 may execute an application that may communicate with the insurance policy generator 302. The application may store the user preferences of the driver 250, in particular the certain insurance policy. Once the driver 250 enters the at least partially autonomous vehicle 210, the application executed by the mobile device(s) 224 associated with the driver 250 may automatically upload the certain insurance policy to the insurance policy generator 302. The insurance policy generator 302 may then select the driving profile which complies with the certain insurance policy.

It is expected that during the life of a patent maturing from this application many relevant devices, systems, methods and computer programs will be developed and the scope of the terms automated driving unit sensors and machine learning are intended to include all such new technologies a priori.

As used herein the term "about" refers to ± 10 %.

The terms "comprises", "comprising", "includes", "including", "having" and their conjugates mean "including but not limited to". This term encompasses the terms "consisting of" and "consisting essentially of".

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

Throughout this application, various embodiments of the described subject matter may be presented in a range format. It should be understood that the description in range format is merely for convenience and brevity and should not be construed as an inflexible limitation on the scope of the described subject matter. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

The word "exemplary" is used herein to mean "serving as an example, an instance or an illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the described subject matter may include a plurality of "optional" features unless such features conflict.

It is appreciated that certain features of the embodiments described herein, which are, for clarity, described in the context of separate embodiments, may also be provided in combination in a single embodiment. Conversely, various features of the embodiments described herein, which are, for brevity, described in the context of a single embodiment, may also be provided separately or in any suitable subcombination or as suitable in any other described embodiment. Certain features described in the context of various embodiments are not to be considered essential features of those embodiments, unless the embodiment is inoperative without those elements.

Although the embodiments described herein have been described in conjunction with specific embodiments thereof, it is evident that many alternatives, modifications and variations will be apparent to those skilled in the art. Accordingly, it is intended to embrace all such alternatives, modifications and variations that fall within the spirit and broad scope of the appended claims.

All publications, patents and patent applications mentioned in this specification are herein incorporated in their entirety by reference into the specification, to the same extent as if each individual publication, patent or patent application was specifically and individually indicated to be incorporated herein by reference. In addition, citation or identification of any reference in this application shall not be construed as an admission that such reference is available as prior art to the described subject matter. To the extent that section headings are used, they should not be construed as necessarily limiting.

## Claims

1. A computer implemented method of adjusting a vehicle insurance policy for an at least partially autonomous vehicle (210) according to a selected driving profile, comprising:
detecting an instruction to select a driving profile for a current ride of a vehicle (210) controlled by at least one automated driving unit (220), the driving profile comprising a value for at least one of a plurality of driving parameters of the at least one automated driving unit (220);
obtaining, from at least one data record (310), a risk estimation pre-calculated for the value of the at least one driving parameter extracted from the selected driving profile;
adjusting, using at least one processor, an insurance policy for the current ride according to the risk estimation; and
applying automatically the selected driving profile to the at least one automated driving unit (220) to control the vehicle (210) accordingly during the current ride.

2. The computer implemented method of claim 1, wherein the instruction is issued manually by at least one of: a driver (250) of the vehicle (210), a traffic controller controlling traffic in at least part of a route of the current ride and a supervisor of the vehicle (210).

3. The computer implemented method of claim 1 or 2, wherein the instruction is issued automatically by at least one of: the at least one automated driving unit (220), a mobile device (224) associated with a driver (250) of the vehicle (210), a navigation system (222) of the vehicle (210) and an automated traffic control system controlling traffic in at least part of a route of the current ride.

4. The computer implemented method of any of the preceding claims, wherein the plurality of driving parameters comprise at least one of: a speed limit, an acceleration limit, a turning sharpness limit, a lane change abruptness limit, a breaking rapidness limit and a minimal gap to other objects.

5. The computer implemented method of any of the preceding claims, wherein the insurance policy comprising at least one term which is a member of a group consisting of: a coverage scope, a liability scope and an insurance fee.

6. The computer implemented method of any of the preceding claims, wherein the insurance policy is adjusted locally by a vehicle insurance unit (201) and/or by a remote server (240) which receives the selected driving profile from the vehicle (210) and transmits the adjusted insurance policy back to the vehicle (210).

7. The computer implemented method of any of the preceding claims, wherein the insurance policy is dynamically adjusted during the current ride following an adjustment of the driving profile.

8. The computer implemented method of claim 7, further comprising calculating an estimated insurance cost for a reminder of the current ride according to the adjusted insurance policy.

9. The computer implemented method of any of the preceding claims, further comprising presenting, to a driver (250) of the vehicle (210), an insurance fee calculated for the adjusted insurance policy.

10. The computer implemented method of any of the preceding claims, further comprising adjusting the insurance policy based on a risk estimation selected according to a value of at least one route attribute identified for a route selected for the current ride, wherein the value of the at least one route attribute is identified by at least one of:
analyzing sensory data received from at least one sensor (226) mounted on the vehicle (210), the at least one sensor (226) comprising at least one of: a motion sensor, an imaging sensor, a ranging sensor and an environmental sensor, and
analyzing map data of the geographical area of the current ride.

11. The computer implemented method of any of the preceding claims, further comprising recommending a driving profile associated with an optimal insurance policy, the recommended driving profile is selected according to at least one passenger preference of the driver (250), the at least one passenger preference comprising at least one of: a schedule, a type of the driver (250), a type of the at least one other passenger, an emotional mood of the driver (250) and an emotional mood of the at least one other passenger.

12. The computer implemented method of claim 11, further comprising selecting the recommended driving profile according to at least one passenger preference, the at least one passenger preference is defined by at least one of:
set by a driver (250) of the at least partially autonomous vehicle,
obtained from at least one scheduling application executed by a mobile device associated with the driver (250) and/or with at least one other passenger present in the vehicle (210) during the current ride,
determined by analyzing sensory data received from at least one sensor depicting the driver (250) and/or the at least one other passenger, and
derived from at least one ride pattern of the driver (250) identified using at least one machine learning algorithm.

13. The computer implemented method of any of the preceding claims, further comprising selecting the driving profile according to a predefined insurance policy.

14. The computer implemented method of any of the preceding claims, further comprising locking the at least one automated driving unit (220) to prevent alteration of the driving profile thus preventing adjustment of the insurance policy.

15. A system for adjusting a vehicle insurance policy for a vehicle (210) according to a selected driving profile, comprising:
at least one processor (204) of a vehicle (210) adapted to execute code, the code comprising:
code instructions to detect an instruction to select a driving profile for at least part of a current ride of a vehicle (210) controlled by at least one automated driving unit (220), the driving profile comprising a value for at least one of a plurality of driving parameters of the at least one automated driving unit (220);
code instructions to obtain, from at least one data record (310), a risk estimation pre-calculated for the value of the at least one driving parameter extracted from the selected driving profile;
code instructions to adjust an insurance policy for the current ride according to the risk estimation; and
code instructions to apply automatically the selected driving profile to the at least one automated driving unit (220) to control the vehicle (210) accordingly during the current ride.

16. The system according to claim 15, wherein the system is configured to carry out a computer implemented method as mentioned in any of claims 1 to 15, when the processor executes the code.
